# EUROPÄISCHE PATENTANMELDUNG

(11) **EP 1 462 242 A1**
(43) Veröffentlichungstag der Anmeldung: **29.09.2004**
(21) Anmeldenummer: 03020848.2
(22) Anmeldetag: 13.09.2003
(51) Int. Cl.: B32B 5/00, D04H 13/00

(54) **Abdeckschicht für Motorraumauskleidung**

(30) Priorität: 22.03.2003 DE 10312817
(71) Anmelder: Carl Freudenberg KG, 69469 Weinheim (DE)
(72) Erfinder: Torrents Pallach, August, 08037 Barcelona (ES); Rodriquez, Charles, 08222 Terrasa (Barcelona) (ES); Farre Toran, Llorenc, 08180 Parets del Valles (Barcelona) (ES)

(57) **Zusammenfassung**

Die Erfindung betrifft eine Abdeckschicht für Motorraumauskleidungen bestehend aus mindestens einer Bindemittel- und Vliesstoffschicht, die mit einem Bindemittel verfestigt ist, welches ein thermoplastisches Verhalten im Temperaturbereich von 20 bis 200 °C und ein duroplastisches Verhalten oberhalb von 200 °C aufweist.

## Beschreibung

Die Erfindung betrifft eine Abdeckschicht für Motorraumauskleidung, bestehend aus mindestens einer bindemittelgebundenen Vliesstoffschicht.

Motorraumauskleidungen dienen der akustischen Isolation der Motorgeräusche. Aus dem Dokument WO 02/053373 sind mehrschichtige Materialien bekannt, die als Motorraumauskleidungen eingesetzt werden. Dabei wird eine Substratschicht durch Imprägnierung oder Beschichtung eines Gewebes oder Vliesstoffes aus anorganischen Fasern oder eines Papiers mit einer Harzverbindung, die als anorganischen Füllstoff Löß enthält, wobei das Harz ein thermischhärtendes Harz ausgewählt aus der Gruppe bestehend aus Phenolharzen, modifizierten Phenolharzen, modifizierten Phenol-Harnstoffharzen, Melaminharzen und modifizierten Melaminharzen ist, und einer rückseitigen Schicht aus Aluminium oder einer galvanisierten Stahlplatte.

Aus dem Dokument JP 2002/004164 ist ein flammgeschützter, harzgebundener Vliesstoff bekannt, bei dem der Vliesstoff mit einer Emulsion aus Harz und einem phosphorbasierenden Flammschutzmittel imprägniert wird. Der Vliesstoff soll dabei aus in einem Mischspinnverfahren erzeugten flammgeschützten Viskosefasern und flammgeschützten Fasern aus teilweise karbonisierten normalen Viskose- und/oder Polyacrylnitril-Fasern bestehen.

Weiterhin ist aus dem Dokument JP 02/070428 eine Abdeckschicht für eine Heißschmelzformung bekannt, bei der ein Styrenharz an der Oberfläche eines aus Polyesterfasem und Carbonfasern bestehenden Vliesstoffes copolymerisiert und in einen Heißpressprozess geformt wird.

Als Motorraumauskleidung werden vorwiegend Matten aus phenolharzgetränkter Reißbaumwolle eingesetzt, die mit einem schwarz gefärbten Vliesstoff auf der später sichtbaren Seite bedeckt werden. Der Vliesstoff muß neben der Abdeckung der Reißbaumwolle flüssigkeitsabweisend gegen verschiedenste Flüssigkeiten wie Wasser, Benzin, Diesel, Bremsflüssigkeit, Motoröl und stellenweise flammhemmend ausgerüstet sein. Die Verbindung mit der Reißbaumwolle wird durch Klebemedien, wie PE-Pulver, Co-PES, Co, PA, Melaminharze, Phenolharze, die auf der Rückseite des Vliesstoffes fixiert sind, hergestellt. Der Verbund wird bei 200-230 °C in beheizten Pressen über 60-120s verformt.

Eingesetzt werden bindergebundene und vernadelte Vliesstoffe, die in der Regel in einem zweiten Prozeßschritt durch ein Tränkverfahren flammhemmend und flüssigkeitsabweisend ausgerüstet werden und in einem Schritt rückseitig durch Pudern oder Bedrucken mit dem Klebemedium beschichtet werden.
Aus Kostengürnden werden in der Regel bindergebundene Vliesstoffe bevorzugt, die allerdings bei der Verformung in tiefere Formen oft reißen und dann durch die Nadelvliesstoffe zu erhöhten Kosten ersetzt werden müssen.

Die Automobilindustrie fordert ein Material für die Abdeckschicht der Motorraumauskleidung, welches eine sehr hohe dreidimensionale thermische Formbarkeit oberhalb von 200 ° zeigt und das mit einer Flammschutz sowie flüssigkeitsabstoßenden Eigenschaften ausgerüstet und deren thermischen Bindungsfähigkeit gegen das meist aus preiswerter Reiswolle bestehende Untermaterial groß ist, die Ausrüstung ohne einen zusätzlichen Verfahrensschritt erfolgen soll.

Die Erfindung hat sich die Aufgabe gestellt, einen bindergebundenen Vliesstoff zu entwickeln, der auch wie Nadelvliese für tiefere Verformungen geeignet ist und gleichzeitig durch Integration der flammhemmende und flüssigkeitsabweisende Ausrüstung in die Basisvliesherstellung deutlich kostengünstiger hergestellt werden kann.

Erfindungsgemäß wird die Aufgabe dadurch gelöst, dass eine Abdeckschicht bestehend aus mindestens einem bindemittelgebundenen Vliesstoffschicht mittels eines Bindemittels verfestigt ist, welches ein thermoplastisches Verhalten im Temperaturbereich von 20 bis 200 °C und ein duroplastisches Verhalten oberhalb von 200 °C aufweist. Diese Verhalten wird durch die vernetzende Aushärtung des Bindemittels erreicht. Vorteilhafterweise wird der Vliesstoff mit einem kondensierend vernetzenden Bindemittel gebunden, welches bei einer Temperatur bis 200 °C nur vorvernetzt und bei einer Temperatur über 200 °C ausgehärtet. Das Bindemittel wird dabei ausgewählt aus der Gruppe der Acrylsäure-Co- und Terpolymere mit Styren, Butadien und/oder Acrylnitril, vorzugsweise aus der Gruppe der Acrylsäure-Co- und Terpolymere mit Styren. Das Bindemittel kann weiterhin Flammschutz-, Hydrophobierungs- und/oder Oleophobierungsmittel enthalten. Vorzugsweise ist als Flammschutzmittel eine halogen- und schwermetallfreie Stickstoff enthaltende Phosphorverbindung vorhanden. Bevorzugt ist ein Phosphonsäurederivat mit einer Elementargehalt von ≥10 Gew.-% Stickstoff und ≥5 Gew.-% Phosphor, welches einen hohen Synergismus zeigt. Dabei wird kein hygroskopisches Verhalten des Flammschutzmittels und kein Weichmachereffekt auf das Bindemittel festgestellt. Die Vliesstoffschicht selbst besteht aus Viscose-, Polyester-, Zellulose-, Polyamid-, Polyolefin- und/oder preoxidierten Polyacrylnitril-Fasern. Die erfindungsgemäße Abdichtschicht besitzt ein Flächengewicht von 40 bis 200 g/m², wobei das Gewichtsverhältnis der pro Quadratmeter eingesetzten Fasern zu dem pro Quadratmeter eingesetzten Bindemittel im Bereich von 0,5 :1 bis 2 : 0,5 liegt. Zur Bindung mit den Unterschichten ist die Vliesstoffschicht einseitig mit einem Heißkleber aus Polyethylen-, Copolyester-, Copolyamid-, Melamin- und/oder Phenolharzen beschichtet.

Die Erfindung betrifft auch ein Verfahren, bei dem Stapelfasern mit einer Länge von 20 bis 200 mm und einem Fasertiter von 0.8 bis 40 dtex zu einem Faserflor mit einem Flächengewicht von 10 bis 200 g/m² gelegt und mit einem Bindemittel imprägniert werden, welches ein thermoplastisches Verhalten im Temperaturbereich von 20 bis 200 °C und ein duroplastisches Verhalten oberhalb von 200 °C aufweist. Das Bindemittel wird dabei in Schaumform aufgebracht. Die Florlegung erfolgt so, dass das Verhältnis der Elastizität quer zur Maschinenlaufrichtung (cross direction CD) zu dem in Maschinenlaufrichtung (maschine direction MD) im Bereich von 1 : 4 bis 2 : 1 liegt. Auf die Vliesstoffschicht wird abschließend eine Heißkleberschicht in einer Menge aufgebracht, die mindestens 10 % des aus Vliesstoff, Bindemittel und gegebenenfalls Flammschutz-, Hydrophobierungs- und/oder Oleophobierungsmittel bestehenden Basismaterial beträgt.

Der Hauptvorteil der erfindungsgemäßen Abdeckschicht für Motorraumauskleidungen besteht in der vereinfachten Gestaltung des Produktionsprozesses, wobei Stapelfasern aus weißen oder spinngefärbten schwarzen Fasern durch ein Kardierprozess in einer ungeordneten Weise abgelegt werden. Dabei kann der erhaltene Flor stark in Maschinenrichtung orientiert sein. Anschließend erfolgt die Imprägnierung mit einer Bindemittelmischung in Form eines Schaums, der den Flor penetriert und für eine vollständige Benetzung des Faserflors und somit für die Bindemittelaufnahme sorgt. Wesentlich ist die Auswahl des Bindemittels, wobei dieses zwei verschiedene Phasen des plastischen Verhaltens aufweist. Erstens, ein thermoplastisches Verhalten im Bereich von Raumtemperatur bis 195 °C und zweitens, eine Phase, die durch ein duroplastisches Verhalten oberhalb von 200 °C durch die vollständige Aushärtung des Bindemittels erzielt wird. Weitere Zusätze des Bindesystems sind Flammschutzmittel, Fluorharze und gegebenenfalls Pigmente um der Abdeckschicht einen Flammschutz und flüssigkeitsabstoßende Eigenschaften sowie eine gleichförmige schwarze Färbung zu verleihen. Der Trockungsprozess wird bei einer Temperatur unterhalb von 200 ° durchgeführt. Entsprechend dieser Prozessbedingungen wird ein Vliesstoff erhalten, der einen thermoplastischen Charakter und eine thermische Bindungsfähigkeit besitzt. Im abschließenden Produktionsschritt erfolgt eine Beschichtung des Vliesstoffes mit einem Heißschmelzkleber. Der Heißschmelzkleber, beispielsweise aus einem Polyolefinpolymer verbessert die Bindung des Abdeckmaterials nach der thermischen Formung bei Temperaturen größer 200 °C gegen das Reißwolle-Material. Für das Erreichen der dreidimensional stabilen Formbarkeit ist im Gegensatz zu den bisher eingesetzten Abdeckmaterialien keine Präferenz in der Ausrichtung des Vliesstoff-Flors vor der Verbindung mit dem Reißwolle-Material erforderlich. Während herkömmliches bindemittelgebundener Vliesstoff für die Abdeckschicht von Motorraumauskleidungen immer quer zur Maschinenlaufrichtung eingesetzt werden musste, ist dies jetzt nicht mehr erforderlich. Die mit der erfindungsgemäßen Abdeckschicht hergestellten Motorraumauskleidungen zeigen eine sehr gute dreidimensionale Formbarkeit oberhalb 200 °C. Es tritt keine Delamination der geformten Teile ein. Die Teile besitzen eine sehr gute thermische Dimensionsstabilität und zeigen keine Schrumpfung. Die Abdeckschicht besitzt einen hocheffektiven Flammschutz vor und nach der thermischen Formung bei Temperaturen über 200 °C und einen permanent hydrophoben und oliophoben Charakter. Durch das vorgeschlagene Herstellungsverfahren sinken die Kosten, da auf einen separaten Ausrüstungsschritt mit Flammschutzmitteln und flüssigkeitsabstoßenden Mitteln verzichtet werden kann.

Die Erfindung wird nachfolgend anhand von drei Beispielen näher erläutert:

### Beispiel 1

Aus weißen und schwarzen spinngefärbten Polyesterfasern geringer Festigkeit und einem Fasertiter von 3,3 dtex und einer Faserlänge von 60 mm wird ein Faserflor mit einem Flächengewicht von 35 g/m² quergelegt, wobei durch Zunahme der Geschwindigkeit eine Umorientierung der Fasern stattfindet und das Elastizitätsverhältnis quer zur Maschinenrichtung zu dem in Maschinenrichtung (CD/MD) ungefähr 2,0 :1 beträgt. Der Faserflor wird mit einem Bindemittelschaum aus einem Acrylsäure-Co- oder Terpolymere mit Styren, Butadien und/oder Acrylnitril imprägniert, der zu einen Feststoffgehalt von ungefähr 35 g/m² führt. Die Trocknung erfolgt durch Heißluft bei 200 °C, wobei die Bindemittelaushärtung vermieden wird. Anschließend erfolgt die Beschichtung des verfestigten Vliesstoffes mit einem Heißschmelzkleberpulver, welches an den Vliesstoff angesintert und geschmolzen wird. Die fertige Abdeckschicht wird in einem dreidimensionalen Formprozess bei Temperaturen größer 200 °C gegen ein beispielsweise aus Reißwolle bestehendes Untermaterial eingesetzt. Dabei erfolgt die Formung bei einem Druck von größer 200 bar/cm² für einen Zeitraum von 60 bis 90 Sekunden. Die mit der erfindungsgemäßen Abdeckschicht erhaltenen geformten Teile sind mit der Abdeckschicht perfekt überzogen und haften auch an den scharfen Knicken des Teiles ohne Risse und Delamination. Die Kanten können sauber geschnitten werden.

### Beispiel 2

Aus 60 Gew.-% weißen oder schwarzen spinngefärbten Polyesterfasern mit einer geringen Festigkeit, ein Fasergitter von 3,3 dtex und einer Faserlänge von 60 mm und 40 Gew.-% weißen oder schwarzen spinngefärbten Viskosefasern mit einem Fasergitter von 3,3 dtex, einer Faserlänge von 60 mm wird ein Faserflor von 40 g/m² in einer quergelegten Konfiguration hergestellt, wobei durch Zunahme der Geschwindigkeit eine Reorientierung der Fasern stattfindet und die Elastizitätseigenschaften CD/MD bei 2 : 1 liegen. Der Vliesstoff wird mit einem Bindemittel aus einem thermisch-vernetzenden Copolymeren aus Styren und Acrylsäure mit einem Feststoffgehalt von 40 g/m² imprägniert und mit heißer Luft bei 180 °C getrocknet, so dass eine vollständige Aushärtung des Bindemittels vermieden wird. Abschließend wird ein Heißschmelzkleber aufgetragen, wie im Beispiel 1 beschrieben.

### Beispiel 3

Aus 60 Gew.-% schwarz spinngefärbten Polyesterfasern mit einer Faserfeinheit von 1,7 dtex und einer Faserlänge von 40 mm und 40 Gew.-% einer schwarzen spinngefärbten Viskosefaser mit einer Faserfeinheit von 1,7 dtex und einer Faserlänge von 40 mm wird ein Flor von 80 g/m² belegt. Die Florlegung erfolgt in einer quergelegten Konfiguration, wobei durch Zunahme der Geschwindigkeit eine Reorientierung der Fasern stattfindet und das Elastizitätsverhältnis CD/MD 2 : 1 beträgt. Der Faserflor wird mit einer Bindemittelmischung imprägniert, die einen Trockengehalt von 69 g/m² aufweist. Die Trocknung erfolgt mit heißer Luft unterhalb 200 °C so, dass die vollständige Bindemittelaushärtung vermieden wird. Auf dem Abdeckvliesstoff wird einseitig ein Polyolefinpulver als Heißschmelzkleber aufgebracht und angesintert, wobei die Menge mindestens 10 Gew.-% des Basismaterials beträgt.

In Tabelle 1 sind die Flammfestigkeiten und der Abstoßungswiderstand gemäß der Normvorschriften DIN 75200 und DIN 53906 der gemäß der Beispiele 1 bis 3 erhaltenen Abdeckschichten zusammengestellt.

**Tabelle 1**

| Beispiele | Flammfestigkeit DIN 75200 | Abstoßung nach DIN 53906 |
|---|---|---|
| | | |
| 1 | 0,0 mm/60 s | < 50 cm² |
| 2 | 0,0 mm/60 s | < 50 cm² |
| 3 | 0,0 mm/60 s | < 50 cm² |

## Patentansprüche

1. Abdeckschicht für Motorraumauskleidung bestehend aus mindestens einer bindemittelgebundenen Vliesstoffschicht, **dadurch gekennzeichnet, daß** die Vliesstoffschicht mit einem Bindemittel verfestigt ist, welches ein thermoplastisches Verhalten im Temperaturbereich von 20 bis 200°C und ein duroplastisches Verhalten oberhalb von 200°C aufweist.

2. Abdeckschicht nach Anspruch 1, **dadurch gekennzeichnet, daß** die Vliesstoffschicht mit einem kondensierend vernetzenden Bindemittel gebunden ist, welches bei einer Temperatur bis 200°C vorvernetzt und bei einer Temperatur über 200°C ausgehärtet ist.

3. Abdeckschicht nach einem der Ansprüche 1 oder 2, **dadurch gekennzeichnet, daß** das Bindemittel ausgewählt ist aus der Gruppe der Acrylsäure-Co- oder Terpolymere mit Styren, Butadien und/oder Acrylnitril.

4. Abdeckschicht nach Anspruch 3, **dadurch gekennzeichnet, daß** das Bindemittel ausgewählt ist aus der Gruppe der Acrylsäure-Copolymere mit Styren.

5. Abdeckschicht nach einem der Ansprüche 1 bis 4, **dadurch gekennzeichnet, daß** das Bindemittel Flammschutz-, Hydrophobierungs- und/oder Oleophobierungsmittel enthält.

6. Abdeckschicht nach einem der Ansprüche 1 bis 5, **dadurch gekennzeichnet, daß** als Flammschutzmittel halogen- und schwermetallfreie Stickstoff enthaltende Phosphorverbindungen enthalten sind.

7. Abdeckschicht nach Anspruch 6, **dadurch gekennzeichnet, daß** als Flammschutzmittel Stickstoff enthaltende Phosphonsäurederivate enthalten sind mit einem Elementargehalt von Stickstoff ≥ 10 Gew.-% und Phosphor ≥ 5 Gew.-%.

8. Abdeckschicht nach einem der Ansprüche 1 bis 7, **dadurch gekennzeichnet, daß** die Vliesstoffschicht aus Viscose-, Polyester-, Zellulose-, Polyamid-, Polyolefin- und/oder preoxidierten Polyacrylnitril-Fasern besteht.

9. Abdeckschicht nach einem der Ansprüche 1 bis 8, **dadurch gekennzeichnet, daß** sie ein Flächengewicht von 20 bis 200 g/m² besitzt, wobei das Gewichtsverhältnis der pro Quadratmeter eingesetzten Fasern zu dem pro Quadratmeter eingesetzten Bindemittel im Bereich von 0,5 : 1 bis 2 : 0,5 liegt.

10. Abdeckschicht nach einem der Ansprüche 1 bis 9, **dadurch gekennzeichnet, daß** die Vliesstoffschicht einseitig mit einem Heißkleber aus Polyolefin-, Polyester-, Phenol- oder Melamin-Harz beschichtet ist.

11. Verfahren zur Herstellung einer Abdeckschicht nach einem der Ansprüche 1 bis 10, **dadurch gekennzeichnet, daß** Stapelfasern mit einer Länge von 20 bis 200 mm und einem Fasertiter von 0,8 bis 40 dtex zu einem Faserflor mit einem Flächengewicht von 10 bis 200 g/m² gelegt und mit einem Bindemittel imprägniert werden, welches ein thermoplastisches Verhalten im Temperaturbereich von 20 bis 200°C und ein duroplastisches Verhalten oberhalb von 200°C aufweist.

12. Verfahren nach Anspruch 11, **dadurch gekennzeichnet, daß** das Bindemittel in Schaumform aufgebracht wird.

13. Verfahren nach Anspruch 11, **dadurch gekennzeichnet, daß** die Florlegung so erfolgt, daß das Verhältnis der Elastizität quer zur Maschinenlaufrichtung zu dem in Maschinenlaufrichtung im Bereich von 4 : 1 bis 1 : 2 liegt.

14. Verfahren nach einem oder mehreren der Ansprüche 9 bis 13, **dadurch gekennzeichnet, daß** auf die Vliesstoffschicht eine Heißkleberschicht in einer Menge aufgebracht wird, die mindestens 10% des aus Vliesstoff, Bindemittel und gegebenenfalls Flammschutz-, Hydrophobierungs- und/oder Oleophobierungsmittel bestehenden Basismaterials beträgt.
